Europäisches Patentamt

European Patent Office

Office européen des brevets

(19)

(11) Publication number: 0 390 060
A1

(12) # EUROPEAN PATENT APPLICATION

(21) Application number: 90105774.5

(22) Date of filing: 27.03.90

(51) Int. Cl.5: C08L 27/06, B29C 61/06,
//(C08L27/06,67:02)

(30) Priority: 27.03.89 JP 74695/89

(43) Date of publication of application:
03.10.90 Bulletin 90/40

(84) Designated Contracting States:
DE FR GB IT

(71) Applicant: NIPPON ZEON CO., LTD.
6-1, 2-chome, Marunouchi, Chiyoda-ku
Tokyo(JP)

(72) Inventor: Saito, Yoshiomi
1-13-1, Misora
Yotsukaido-shi, Chiba-ken(JP)
Inventor: Nagata, Nobuo
1403-15-302, Matano-cho, Totsuka-ku
Yokohama-shi, Kanagawa-ken(JP)

(74) Representative: Kraus, Walter, Dr. et al
Patentanwälte Kraus, Weisert & Partner
Thomas-Wimmer-Ring 15
D-8000 München 22(DE)

(54) Shape-memorizing resin composition and method for use thereof and molding having shape memory.

(57) A shape-memorizing resin composition which comprises (A) vinyl chloride type resin, (B) polyester type thermoplastic elastomer and (C) plasticizer, wherein the quantity of (A) component is 90 to 50 % by weight of the total quantity of (A) component and (B) component, and the quantity of (C) component is 0 to 30 by weight of the total quantity of (A) component and (B) % component, and which has a second order transition temperature of 0 to 65°C.

EP 0 390 060 A1

## SHAPE-MEMORIZING RESIN COMPOSITION AND METHOD FOR USE THEREOF AND MOLDING HAVING SHAPE MEMORY

This invention relates to a resin composition having a shape memorization property, more detailedly to a shape-memorizing resin composition excellent in strength, shape retention property and shape recovery property.

This invention also relates to a method for use of such resin composition and a molding having shape memory (hereinafter referred to as a shape memory-having molding) prepared from such resin composition.

The shape memory-having molding is a molding which in case its handling in its original shape is difficult in various operations such as mounting, assembling or transportation, can be rendered easily handlable by imparting deformation, and can recover its original shape after such an operation is terminated. It has utility in various industrial applications. This shape memory-having molding can also be used for the purpose of recovering the original shape of a deformed molding, for exmaple as a toy.

Examples of such shape memory-having molding include polynorbornene-type polymer moldings (U.S. Patent No. 4,831,094), crosslinked moldings obtained using polycaprolactone (Japanese Laid-Open Patent Publication No. 11315/1984), crystalline diene type crosslinked moldings (Japanese Laid-Open Patent Publication No. 192440/1987), and moldings of three-dimensional network structure composed of a mixture of vinyl type polymer and acrylic acid derivative polymer (Japanese Laid-Open Patent Publication No. 174263/1987). These conventional moldings having shape memory have not proved to be entirely satisfactory in practical application with respect to strength, shape retention property, temperature at which the original shape is recovered (hereinafter refer red to as shape recovery temperature), etc.

An object of the invention lies in obtaining a shape memory-having molding excellent in strength, shape retention property and shape recovery property.

The present inventors have vigorously investigated and found that the above object can be attained by using a resin composition having particular composition.

Thus, there is provided according to the present invention a shape-memorizing resin composition which comprises (A) vinyl chloride type resin, (B) polyester type thermoplastic elastomer and (C) plasticizer, wherein the quantity of (A) component is 90 to 50 % by weight of the total quantity of (A) component and (B) component, and the quantity of (C) component is 0 to 30 % by weight of the total quantity of (A) component and (B) component, and which has a second order transition temperature of 0 to 65 °C.

There is also provided according to the present invention a method for use of the shape-memorizing resin composition which comprises melt molding the shape-memorizing resin composition at temperature equal to or higher than melting point of the polyester type thermoplastic elastomer to prepare a molding memorizing the shape at the time of the melt molding; deforming (post-molding) the molding into an optional shape at temperature (post-molding temperature) equal to or higher than the second order transition temperature of the shape-memorizing resin composition and lower than melting point of the polyester type thermoplastic elastomer; cooling the resulting molding to a temperature less than the second order transition temperature to fix the deformation; and heating the resulting molding to temperature (shape recovery temperature) equal to or higher than the post-molding temperature and lower than melting point of the polyester type thermoplastic elastomer to release the fixation of deformation and to make the molding recover the shape which it memorized at the time of melt molding. There is further provided according to the invention a shape memory-having molding obtained by melt molding the shape-memorizing resin composition at temperature equal to or higher than melting point of the polyester type thermoplastic elastomer.

In the shape-memorizing resin composition of the present invention, it is necessary to use the vinyl chloride type resin, (A) component in a quantity of 90 to 50 % by weight, preferably 90 to 70 % by weight of the total quantity of (A) component and (B) component (polyester type thermoplastic elastomer). If the quantity of vinyl chloride type resin is above 90 % by weight, results are brought about that it is difficult to deform a molding from the resulting resin composition and moreover the deformed molding has only a poor shape recovery property, whereas if the quantity of vinyl chloride type resin is below 50 % by weight, a result is brought about that the resulting resin composition has only a poor shape retention property of post-molded shape given to the molding. In this invention, shape retention means that the post-molded molding, when any treatment was not conducted thereon, maintains its shape.

Any vinyl chloride type resin can be used in the invention so long as it contains 50 % by weight or more vinyl chloride units, and a vinyl chloride resin or a copolymer resin of vinyl chloride and a monomer copolymerizable therewith. Examples of the monomer copolymerizable with vinyl chloride include carboxylic acid vinyl esters such as vinyl acetate and vinyl propionate; ethers of unsaturated alcohol such as methyl

2

vinyl ether, isobutyl vinyl ether, cetyl vinyl ether and (meth)allyl glycidyl ether; vinylidene halide such as vinylidene fluoride; unsaturated carboxylic acid esters such as diethyl maleate, butyl benzyl maleate, di-2-hydroxyethyl maleate, dimethyl itaconate, methyl (meth)acrylate, ethyl (meth)acrylate, lauryl (meth)acrylate, 2-hydorxypropyl (meth)acrylate and glycidyl (meth)acrylate; vinyl-substituted aromatic carboxylic acid esters such as glycidyl p-vinylbenzoate; unsaturated sulfonic acid esters such as glycidyl vinylsulfonate and glycidyl (meth)allylsulfonate; $\alpha,\beta$-unsaturated nitriles such as (meth)acrylonitrile; epoxide monoolefins such as butadiene monoxide and vinylcyclohexene monoxide; olefins such as ethylene and propylene; aromatic vinyl compounds such as styrene, -methylstyrene and p-methylstyrene; etc. However, the monomers are not limited thereto.

Although molecular weight of these vinyl chloride type resins is not particularly limited, those having a polymerization degree of 400 to 2,000, preferably 500 to 1,400 are usually used.

The polyester type thermoplastic elastomer used in the invention is a polymer or copolymer obtained by a condensation reaction using as main reaction components dicarboxylic acid or its equivalent in ester formation ability (ester, halide, anhydride or the like) together with diol or its equivalent in ester formation ability (ethylene oxide, ethylene carbonate or the like), and is not limited by its synthetic method.

In the polyester type thermoplastic elastomer to be used in the invention, it is necessary to use as diol components polyalkylene glycol in a quantity of 5 by weight or more, preferably 10 % by weight or more of the whole diols and glycol other than polyalkylene glycol in a quantity of 95 % by weight or less, preferably 90 % by weight or less of the whole diol. If the use quantity of polyalkylene glycol is below 5 % by weight, compatibility between the polyester type thermoplastic elastomer and the vinyl chloride type resin lowers and at the same time second order transition temperature of the resin composition heightens, and thus shape recovery of the resulting molding becomes difficult. On the other hand, if use quantity of the polyalkylene glycol goes beyond 95 % by weight, melting point of the polyester type thermoplastic elastomer becomes too low, and therefore permanent set is liable to remain in moldings obtained from the resin composition. It is sufficient that dicarboxylic acid used in synthesis of the above polyester type thermoplastic elastomer is a dicarboxylic acid having a molecular weight of about 300 or less. Specific examples thereof include aromatic dicarboxylic acids such as terephthalic acid, isophthalic acid and naphthalenedicarboxylic acid; aliphatic dicarboxylic acids such as adipic acid, sebacic acid and azelaic acid; alicyclic dicarboxylic acids such as 1,4-cyclohexanedicarboxylic acid; etc., but usable dicarboxylic acid is not limited thereto. It is also possible to use two or more of these dicarboxylic acids together.

It is sufficient that the polyalkylene glycol to be used in the above synthesis is a long chain glycol having a molecular weight of about 300 to 6,000. Specific examples thereof include polyethylene glycol, polypropylene glycol, polytetramethylene glycol, polypentamethylene glycol, polyhexamethylene glycol, (ethylene oxide/propylene oxide) copolymer, etc., but they are not limitative examples.

As for diol other than polyalkylene glycol one having 2 to 20 carbon atoms can be used. Examples therof include alkylene glycols, cycloalkylene glycols, arylene glycol, etc. Examples of the alkylene glycol include ethylene glycol, propylene glycol, 1,4-butanediol, 1,6-hexanediol, etc., examples of the cycloalkylene glycol include cyclohexanediol, etc., and examples of the arylene glycol include 1,5-dihydroxynaphthalene, hydroquinone, bis(p-hydroxy)diphenyl, etc., but other ones than the above examples may be used if desired.

It is also possible to use together two or more of the above polyalkylene glycols, or two or more of the above diols other than the polyalkylene glycols, respectively.

Although molecular weight of the polyester type thermoplastic elastomer to be used in the invention is not particularly limited, it is preferable in view of moldability of the resulting resin composition that its melt flow index (measuring conditions: temperature 200° C, load 2160 g, time 10 minutes) is 5 to 15 g/minute.

Each of these characteristics of the polyester type thermoplastic elastomers can suitably be selected taking desired shape memorization characteristics (melt molding temperature, post-molding temperature, shape recovery temperature, temperature at which the molding is used, etc.) into account.

Further, in order to prevent thermal decomposition of the vinyl chloride type resin at the time of melt molding of the shape-memorizing resin composition, the polyester type thermoplastic elastomer to be used in the invention is preferably one having a melting point below thermal decomposition temperature of the vinyl chloride type resin used together.

In the invention, it is necessary that the quantity of plasticizer is 30 % by weight or less of the total quantity of (A) component and (B) component, and if the quantity goes beyond this range, shape retention property of the resulting molding lowers.

Any plasticizer can be used in the invention so long as it is compatible with the vinyl chloride type resin and the soft segment of the polyester type thermoplastic elastomer. Specific examples thereof include chlorinated paraffins, octyl diphenyl phosphate, dipropylene glycol dibenzoate, butyl phthalyl butyl glycollate, etc.

Among the above resin compositions, those having a second order transition temperature of 0 to 65°C are used in the invention. If the second order transition temperature is above 65°C, high temperature is necessitated to post-mold the shape memory-having molding, whereas if the second order transition temperature is below 0°C, considerably low temperature is necessitated for fixation of the shape after the post-molding, and therefore both cases are undesirable in practical use.

The shape-memorizing resin composition of the invention can contain a small amount of other resins so long as they do not spoil the effects of the invention. Examples thereof include thermoplastic resins such as polyethylene, polypropylene, ADS resins and polyamides; thermosetting resins such as phenol resins, melamine resins and epoxy resins; soft thermoplastic resins such as ethylene/vinyl acetate copolymers; etc.

Further, the shape-memorizing resin composition of the invention can contain, if necessary, bulking agent, rubber-reinforcing agent, rubber-softening agent, age resister, antioxidant, ozone deterioration-preventing agent, ultraviolet absorber, pigment, dye, tackifier resin, other compounding agent, etc.

There is no particular restriction about process of preparation of the shape-memorizing resin composition of the invention. For example, there can be adopted a process which comprises preliminarily mixing three components, i.e. (A) component, (B) component and (C) component and supplying the resulting mixture to an extruder wherein they are melt neaded, and a process which comprises preliminarily mixing optional two components of the three components to melt and knead them and then adding the third component thereto to melt knead them. There can for example be used for melt kneading open roller, bambury mixer, kneader, etc., but it is also possible to use other machines. It is not always necessary that the temperature at which the shape-memorizing resin composition of the invention is melt mixed is temperature equal to or higher than the melting points of (A), (D) and (C) components, and it can also be a temper ature below the melting points in some compositions.

The shape-memorizing resin composition of the invention is used according to the following procedures (1) to (4):

(1) The shape-memorizing resin composition is melt molded (primarily molded) into a desired shape at temperature equal to or higher than the melting point of the polyester type thermoplastic elastomer to prepare a molding which has memory of the shape at the time of the melt molding. Form of the molding is not particularly limited. Method of melt molding is not particularly limited, and there can be adopted various usual known molding methods, for example, methods such as extrusion molding, injection molding and press molding. It is sufficient that melt molding temperature is temperature equal to or higher than melting point of the polyester type thermoplastic elastomer.

(2) This molding having shape memory is deformed (post-molded) into an optional shape at temperature equal to or higher than second order transition temperature of the shape-memorizing resin composition and lower than melting point of the polyester type thermoplatic elastomer (The temperature is called post-molding temperature). There is no particular restriction about the way to cause deformation, it is sufficient that the molding is placed under a temperature atmosphere where it is easy to deform (for example, in the heated air, in heated liquid, in steam, etc.) according to shape, wall thickness and the like of the molding, and made to deform with suitable instrument or apparatus or with empty hands.

(3) The deformed molding is cooled with maintenance of its shape to a temperature below the above second order transition temperature to fix the deformation. There can be exemplified as means to fix the deformation a method wherein the deformed molding is put into a medium such as cold water, cold solvent or cold wind, but the means is not limitated thereto.

(4) The molding having the fixed deformation is heated to temperature equal to or higher than the above post-molding temperature and less than melting point of the above polyester type thermoplastic elastomer to release the fixation of deformation (the temperature is called shape recovery temperature) and to make the molding recover the shape which it memorized at the time of melt molding. Although the higher the shape recovery temperature is, the sooner shape recovery is, a part or all of the memory about shape is lost at temperature equal to or higher than melting point of the above polyester type thermoplastic elastomer. Means for heating is also not particularly limited, various methods similar to those in melt molding can be adopted.

Shape recovery temperature of the molding having shape memory of the invention can easily be arranged in the desired range, since second order transition temperature of the shape-memorizing resin composition can be changed by changing its composition.

The shape memory-having molding of the invention can repeatedly be reused. Namely, since in case a molding having shape memory obtained by melt molding a shape-memorizing resin composition is heated again to a temperature equal to or higher than melting point of the above polyester type thermoplastic elastomer, the memory about shape already given is lost, it is possible to obtain a molding having another use and another shape by giving another shape memory.

As is seen from the foregoing, it is possible according to the invention to obtain a shape-memorizing resin composition which is excellent in strength, shape retention property and shape recovery property, can repeatedly be molded, and has controlled shape recovery temperature.

The shape-memorizing resin composition of the invention can, after it is made to memorize a shape, be deformed into an optional shape by post-molding followed by fixation of this deformation, and, if necessary, made to recover the original shape.

The shape-memorizing resin composition of the invention can be converted to moldings of various forms having memory of desired shape according to various molding methods. In case these moldings are difficult to handle in these shapes in such operations as mounting, assembling or transportation, their shape is changed by post-molding for easy handling, and after the end of such operations, it is possible to recover their memorized original shape and make the moldings perform their intended function. The shape memory-having moldings of the invention which take advantage of these characteristics have utility, for example, as joint materials or seal materials for jointly portions of pipes, electrical wires, etc.; laminating materials for the inside and outside parts of pipes or rod-like objects; various fixing materials; and shock absorbing materials.

The shape memory-having moldings of the invention can also be used in applications wherein the main purpose is to restore a deformed molding to the original state. Examples of such utility are toy parts, teaching materials, decorative articles, etc. Further, in these applications, the shape memory-having molding can also be used in such applications that complete shape recovery is not always necessary, and an article is made to be held by the molding by utilizing the properties of the molding whose shape tends to be recovered or a space inside an article is made to be sealed up by the molding.

The present invention is further specifically described below by examples. Parts and % in the examples are based on weight unless otherwise defined.

Second order transition temperature in each example is the temperature at which in case where dynamic shear modulus $G'$ and loss modulus $G''$ were measured as a function of temperature about rectangular specimens deformed with twisting (32.1 mm long, 12.7 mm wide, 1 to 3 mm thick) using RHEOMETRIC Dynamic Analyzer (produced by RHEOMETRIC Co., U.S.A.), $G''$ indiated maximum value.

Example 1

Vinyl chloride resin (NIPEON 103EP, produced by Nippon Zeon Co., Ltd., average polymerization degree 700) (70 parts) and 30 parts of polyester type thermoplastic elastomer (Hytrel 4056, E.I. du Pont de Nemours & Company, Inc., melting point 156°C) were kneaded using a roller at 150°C for 5 minutes. The resulting sheet was pressed by a press at 160°C for 5 minutes to prepare a sheet 1 mm thick. Second order transition temperature of this sheet was 35°C. Specimens 5 mm wide and 100 mm long were prepared from this sheet. Two lines were marked at an interval of 50 mm on the center part of these specimens. Then, the specimens were stretched lengthwise at an atmosphere temperature of 60°C so that the distance between the marked lines became 100 mm, held in the state for one minute, and cooled to 23°C still in the state. Then, tension was removed and the specimens were left at 23°C for 30 minutes. At the point of time the distance L between the marked lines was measured, and shape retention rate defined by the following equation was determined therefrom and revealed to be 96 %:

$$\text{Shape retention rate} = \frac{L-50}{50} \times 100 \ (\%)$$

Then, the specimens after measurement of the above shape retention rate were again left for one minute under an atmosphere of 60°C and then left at 23°C for 30 minutes. At the point of time the distance $L_1$ between the marked lines was measured, and shape recovery rate was determined according to the following equation and revealed to be 85 %:

$$\text{Shape recovery rate} = \frac{100-L_1}{50} \times 100 \ (\%)$$

Further, tensile strength was 29 MP which was measured according to JIS K-7113 about the specimens

5

separately prepared in the same manner from the above shape-memorizing resin composition.

It is seen from these results that moldings obtained from shape-memorizing resin composition of the invention are excellent in shape retention property and shape recovery property and moreover have large strength.

## Examples 2 to 6 and Comparative examples 1 to 3

The same tests as in Example 1 were carried out except that formulations having a composition indicated in Table 1 were used and post-molding temperature was set at temperature higher by 5 to 50°C than the second order transition temperatures indicated in Table 1. The results are indicated in Table 1.

Table 1

| Formulation | Comparative Example 1 | Comparative Example 2 | Example 2 | Example 3 | Example 4 | Example 5 | Example 6 | Comparative Example 3 |
|---|---|---|---|---|---|---|---|---|
| NIPEON103EP | 95 | 90 | 90 | 90 | 80 | 70 | 50 | 30 |
| Hytrel4056 | 5 | 10 | 10 | 10 | 20 | 30 | 50 | 70 |
| Dioctylphthalate | | 40 | 20 | | 10 | 5 | | |
| KS-4C(1) | 3 | 3 | 3 | 3 | 3 | 3 | 3 | 3 |
| PE191D(2) | 1 | 1 | 1 | 1 | 1 | 1 | 1 | 1 |
| Stearic acid | 0.5 | 0.5 | 0.5 | 0.5 | 0.5 | 0.5 | 0.5 | 0.5 |
| Second order transition temperature ($^\circ$C) | 75 | -15 | 25 | 65 | 15 | 20 | 0 | -35 |
| Shape retention rate (%) | 98 | 60 | 92 | 98 | 95 | 90 | 80 | 58 |
| Shape recovery rate (%) | 5 | 85 | 86 | 95 | 87 | 88 | 83 | 83 |
| Tensile strength (MPa) | 53 | 18 | 46 | 52 | 28 | 27 | 23 | 17 |

(1) Butyltin type stabilizer (produced by Kyodo Yakuhin Co., Ltd.)
(2) Polyethylene wax (produced by Hoechst Japan Limited)

EP 0 390 060 A1

It is seen from the results in Table 1 that the moldings made of shape-memorizing resin compositions of the invention are excellent in shape retention property and shape recovery property and moreover have a large strength, whereas the moldings made of resin compositions deviating from definition of the invention are inferior to the former moldings in shape retention property, shape recovery property or tensile strength.

**Claims**

1. A shape-memorizing resin composition which comprises (A) vinyl chloride type resin, (8) polyester type thermoplastic elastomer and (C) plasticizer, wherein the quantity of (A) component is 90 to 50 % by weight of the total quantity of (A) component and (B) component, and the quantity of (C) component is 0 to 30 % by weight of the total quantity of (A) component and (B) component, and which has a second order transition temperature of 0 to 65° C.

2. The shape-memorizing resin composition of Claim 1 wherein the quantity of (A) component is 90 to 70 % by weight of the total quantity of (A) component and (B) component.

3. The shape-memorizing resin composition of Claim 1 or 2 wherein said vinyl chloride tye resin is one containing 50 % by weight or more of the vinyl chloride unit.

4. The shape-memorizing resin composition of Claim 1 or 2 wherein said polyester type thermoplastic elastomer is one obtained by condensation reaction of (1) dicarboxylic acid or equivalent of dicarboxylic acid in ester formation ability selected from the group consisting of ester, halide and anhydride of dicarboxylic acid, with (2) diol or equivalent of diol in ester formation ability selected from the group consisting of ethylene oxide and ethylene carbonate.

5. The shape-memorizing resin composition of Claim 4 wherein said polyester type thermoplastic elastomer is one obtained using as diol component 5 % by weight or more polyalkylene glycol and 95 % by weight or less of glycol other than polyalkylene glycol.

6. A method for use of the shape-memorizing resin composition of one of Claims 1 to 5 which comprises melt molding the shape-memorizing resin composition at temperature equal to or higher than melting point of the poly ester type thermoplastic elastomer to prepare a molding memorizing the shape at the time of the melt molding; deforming (post-molding) the molding into an optional shape at temperature (post-molding temperature) equal to or higher than the second order transition temperature of the shape-memorizing resin composition and lower than melting point of the polyester type thermoplastic elastomer; cooling the resulting molding to a temperature less than the second order transition temperature to fix the deformation; and heating the resulting molding to temperature (shape recovery temperature) equal to or higher than the post-molding temperature and lower than melting point of the polyester type thermoplastic elastomer to release the fixation of deformation and to make the molding recover the shape which it memorized at the time of melt molding.

7. A molding having shape memory obtained by melt molding the shape-memorizing resin composition of one of Claims 1 to 5 at temperature equal to or higher than melting point of the polyester type thermoplastic elastomer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 138 095 (E.I. DU PONT DE NEMOURS) <br> * Claims 1,3,7,9; examples 1,2 * <br> --- | 1-5 | C 08 L 27/06 <br> B 29 C 61/06 // <br> (C 08 L 27/06 <br> C 08 L 67:02 ) |
| X | PATENT ABSTRACTS OF JAPAN, vol. 8, no. 62 (C-215)[1499], 23rd March 1984; & JP-A-58 217 539 (TORAY, K.K.) 17-12-1983 <br> * Abstract * <br> ----- | 1-5 | |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 05-07-1990 | SCHUELER D.H.H. |

EPO FORM 1503 03.82 (P0401)